# EUROPEAN PATENT APPLICATION

(11) **EP 2 562 051 A1**
(43) Date of publication of application: **27.02.2013**
(21) Application number: 12179139.6
(22) Date of filing: 03.08.2012
(51) Int. Cl.: B60R 11/04

(54) **Refractive optical device and imaging system.**

(30) Priority: 24.08.2011 US 201113216506
(71) Applicant: Delphi Technologies, Inc., Troy, MI 48007 (US)
(72) Inventor: Taylor, Ronald M., Greentown, IN 46936 (US); Nohns, Dennis C., Kokomo, IN 46901 (US)
(74) Representative: Denton, Michael John

(57) **Abstract**

An imaging system (28) is configured to refractively shift light from a field of view about a vehicle (26) to an image sensing device (36). The field of view is directed through a vehicle window (38) characterized as having a substantial rake angle (74). The imaging system (28) includes a first refractive element (40) configured to be optically coupled with the vehicle window (38). Light impinging on a first surface (42) of the first refractive element (40) along the field of view axis (32) passes through the first refractive element (40) and exits a second surface (44) along an intermediate axis (48). The imaging system (28) includes a second refractive element (50) in optical communication with an image sensing device (36). Light impinging on a third surface (52) of the second refractive element (50) along the intermediate axis (48) passes through the second refractive element (50) and exits a fourth surface (56) along an image sensing device axis (34), whereby light from the field of view is directed into the image sensing device (36).

## Description

### TECHNICAL FIELD OF INVENTION

The invention generally relates to an optical device configured to refractively shift light propagating along a field of view axis of a field of view about a vehicle to an image sensing device axis of an image sensing device, and more particularly relates to an optical device wherein the field of view axis is directed through a vehicle window characterized as having a substantial rake angle.

### BACKGROUND OF INVENTION

Imaging systems are frequently used in motorized vehicles to provide views of the area around the vehicle. In the case of forward looking imaging systems, images provided by the imaging system are often used for collision avoidance applications (e.g. lane tracking systems, adaptive cruise control systems, etc.). The proper functioning of these systems depends in part on the quality of the images produced by the imaging system. Typically, these imaging systems are located adjacent to a vehicle window. In the forward looking imaging system, it is typically located between the vehicle's windshield and the rear view mirror to maintain a view of the road ahead which is similar to the driver's view.

Some imaging systems make use of an optically opaque boot or enclosure to completely enclose the optical path of the imaging system to the vehicle window to optically isolate it from the rest of the vehicle passenger compartment to reduce glare reflections. This boot or enclosure is commonly known as a glare shield. The size of the glare shield is determined primarily by the proximity of an image sensing device to the vehicle window and the rake angle of the vehicle window. There may be a large difference in window rake angles, particularly windshield rake angles between a large sports utility vehicle (SUV) or truck (typically 33 degrees to 65 degrees from horizontal) and a performance oriented car (typically around 15 degrees to 25 degrees from horizontal). The low windshield rake angles used for some automotive vehicle platforms may create a situation in which the glare shield of the imaging system will become prohibitively large. This may make locating the imaging system between the windshield and the rear view mirror problematic. A large glare shield in that location may also significantly reduce the driver's view through the windshield.

With vehicles becoming more aerodynamically shaped to present the lowest wind resistance in order to increase vehicle fuel efficiency, windshield rake angles will likely continue to decrease in future vehicle designs. For example, internal combustion/electric hybrid vehicles and electrical vehicles that are designed for reduced energy consumption typically have a smaller windshield rake angle than their internal combustion engine vehicle predecessors. As more aerodynamic designs are adapted to improve fuel consumption, the low windshield rake angles used for current sports car designs may become commonplace for family vehicles.

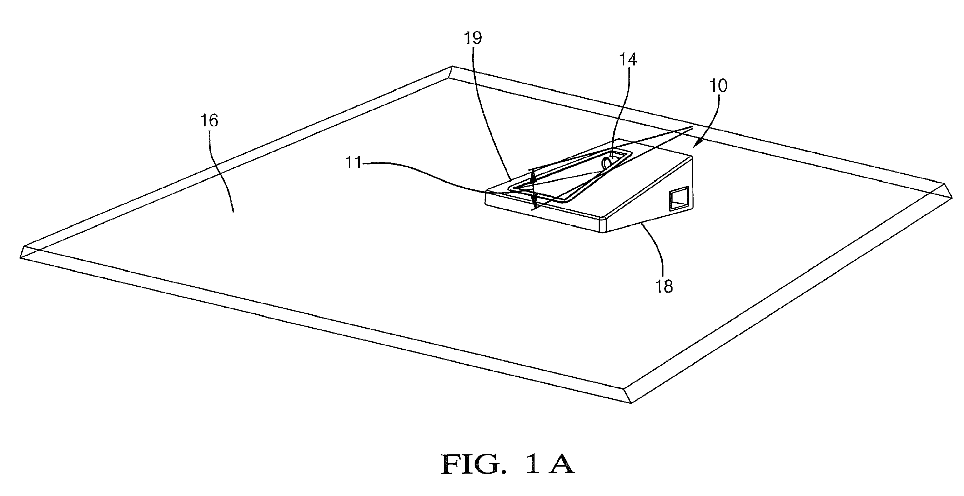

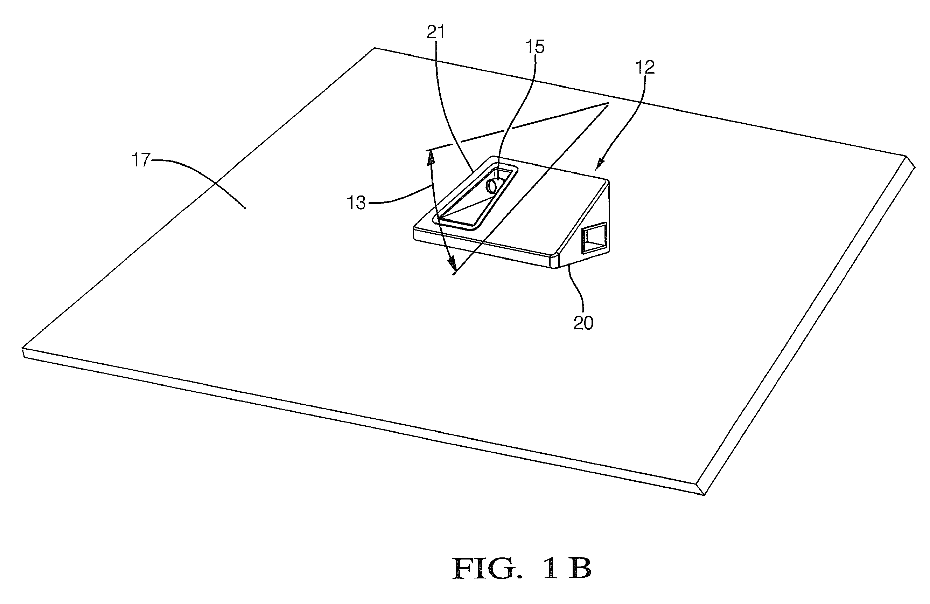

Fig. 1A illustrates an imaging system 10 for a vehicle that has a smaller windshield rake angle 11. Fig. 1B illustrates an imaging system 12 for a different vehicle that has a larger windshield rake angle 13. A prior art solution to minimizing the size of the glare shield is placing the entrance pupil of the image sensing device (i.e. the forward point of the image sensing device lens surface) as close to the windshield inner surface as possible. The size of the glare shield is limited when the upper portion of the image sensing device lens/mount 14, 15 makes physical contact with the windshield 16, 17. The lower surface 18 of the glare shield 19 is larger than the lower surface 20 of the glare shield 21 when the image sensing device lens/mount 14, 15 is in close proximity to the windshield 16, 17.

It has been suggested that interposing a refractive block having an index of refraction that is greater than the index of refraction of air (about 1.00), may reduce the optical path length of the light between the windshield and the image sensing device lens. This is optically the same as bringing the image sensing device lens closer to the windshield surface.

A single prismatic-shaped refractive block shape has been considered. The natural wedge shape created by the windshield rake angle creates a volumetric area that a prismatic-shaped refractive block member can be placed within. The single prismatic-shaped refractive block can substitute for the air space normally between the windshield and the image sensing device lens and reduce the optical path length.

The refractive block shown in US Patent 7,095,567 shows a technique using a single refractive block with a light-entrance surface that is mounted to a windshield or other refractive boundary on a vehicle and a light-exit surface. The refractive block is configured to refract an optical path of light corresponding to an imaged area and direct the light to an image sensing device.

A disadvantage of the single prismatic-shape refractive block is potential optical distortion due to the non-symmetrical light bending or refraction. This is because the varying refraction (or deviation) of light ray angles from the field of view caused by a prismatic shape varies with the incoming light ray's incident angle. The varying incoming light rays of the image sensing device's field of view enter the refractive block surface at various incident angles. Due to the variation in thickness across the refractive block, the refraction introduces a deviation of the varying exit angles of the light rays and does so at incrementally varying amounts across the field of view. This variation in the refracted angle deviation can cause optical distortion of the total field of view.

For example, the single prismatic-shape refractive block may be regarded as essentially a one dimensional optical surface. In the horizontal (or azimuth) direction, the single prismatic-shape refractive block is optically equivalent to parallel planes of glass and hence causes no effective optical deviation or distortion in this direction. However, in the vertical (or elevation) direction, the single prismatic-shape refractive block's prismatic shape geometry may cause varying amount of refracted light deviation and potentially introduces distortion in the vertical plane.

Additionally, variation in windshield rake angles may result in non-standard versions of the imaging system. The size and shape of the refractive block may need to be tailored for different vehicle platforms, causing design changes to the imaging system particularly the mounting/packaging subsystem. This variation may cause high recurring design and module costs to implement the imaging system in different vehicle platforms.

It is therefore appropriate to consider novel techniques which maintain the quality of the imaging system's image, reduce the physical size of the imaging system glare shield, and create a common modular reusable design applicable to several vehicle platforms.

### SUMMARY OF THE INVENTION

In accordance with one embodiment of this invention, an optical device is provided. The optical device is configured to refractively shift light propagating along a field of view axis of a field of view about a vehicle to an image sensing device axis of an image sensing device. The field of view axis is directed through a vehicle window characterized as having a substantial rake angle. The optical device includes a first refractive element formed of material having a first index of refraction. The first refractive element defines a first surface configured to be optically coupled with the vehicle window. The first refractive element defines a second surface oriented at a first prism angle to the first surface, whereby light impinging on the first surface along the field of view axis passes through the first refractive element and exits the second surface along an intermediate axis. The optical device further includes a second refractive element formed of material having a second index of refraction. The second refractive element defines a third surface separated from the second surface by a refractive boundary layer. The second refractive element defines a fourth surface oriented to the third surface at a second prism angle, whereby light propagating through the refractive boundary layer and impinging on the third surface along the intermediate axis passes through the second refractive element and exits the fourth surface along the image sensing device axis, whereby light from the field of view is directed to the image sensing device.

In another embodiment of the present invention, an imaging system is provided. The imaging system is configured to refractively shift light propagating along a field of view axis of a field of view about a vehicle to an image sensing device axis of an image sensing device. The field of view axis is directed through a vehicle window characterized as having a substantial rake angle. The imaging system includes a first refractive element formed of material having a first index of refraction. The first refractive element defines a first surface configured to be optically coupled with the vehicle window. The first refractive element defines a second surface oriented at a first prism angle to the first surface, whereby light impinging on the first surface along the field of view axis passes through the first refractive element and exits the second surface along an intermediate axis. The imaging system also includes a second refractive element formed of material having a second index of refraction. The second refractive element defines a third surface separated from the second surface by a refractive boundary layer. The second refractive element defines a fourth surface oriented to the third surface at a second prism angle, whereby light impinging on the third surface along the intermediate axis passes through the second refractive element and exits the fourth surface along the image sensing device axis. The image sensing device is in optical communication with the second refractive element, whereby light from the field of view is directed into the image sensing device.

Further features and advantages of the invention will appear more clearly on a reading of the following detailed description of the preferred embodiment of the invention, which is given by way of non-limiting example only and with reference to the accompanying drawings.

### BRIEF DESCRIPTION OF DRAWINGS

The present invention will now be described, by way of example with reference to the accompanying drawings, in which:

Fig. 1A is an illustration of a prior art imaging system with a glare shield configured for a vehicle having a larger windshield rake angle;

Fig. 1B is an illustration of a prior art imaging system with a glare shield configured for a vehicle having a smaller windshield rake angle;

Fig. 2 is an illustration of a vehicle having an imaging system in accordance with one embodiment;

Fig. 3 is an illustration of an imaging system, wherein the first refractive device and the second refractive device define a wedge prism shape, in accordance with one embodiment;

Fig. 4 is an illustration of an optical device, wherein the first refractive device and the second refractive device define a wedge prism shape, in accordance with one embodiment;

Fig. 5 is an illustration of an imaging system, wherein the second refractive element is configured to function as a lens element of an image sensing device, in accordance with one embodiment;

Fig. 6 is an illustration of an imaging system, wherein the first refractive device and the second refractive device may be characterized as a parallel plate shape, in accordance with one embodiment;

Fig. 7 is an illustration of an optical device, wherein the first refractive device and the second refractive device may be characterized as a parallel plate shape, in accordance with one embodiment; and

Fig. 8 is graph showing the relationship between the angular orientation of a lens axis and an image sensing device axis and optical field distortion observed in an image in accordance with one embodiment.

### DESCRIPTION OF THE PREFERRED EMBODIMENTS

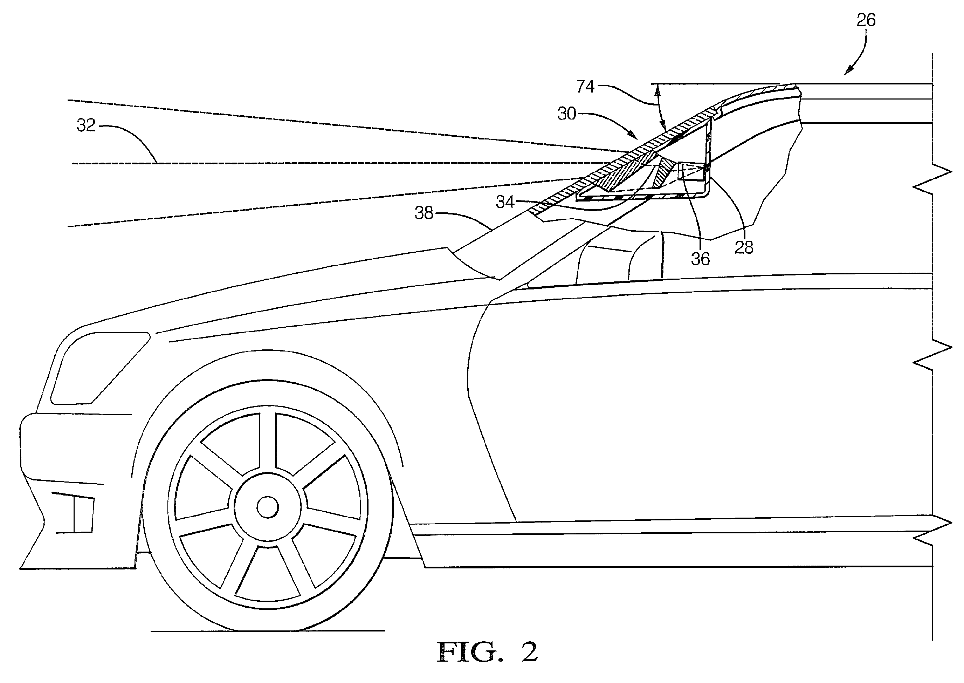

Fig. 2 illustrates a non-limiting example of a vehicle 26 equipped with an imaging system 28. The imaging system 28 includes an optical device 30 and an image sensing device 36. The imaging system 28 may be used to provide views of the area around the vehicle 26. In the case of a forward looking imaging system 28, images provided by the imaging system 28 may be used for collision avoidance applications (e.g. lane tracking systems, adaptive cruise control systems, etc.). The imaging system 28 may be alternately configured to provide views of the areas on the side and rear of the vehicle 26 for other safety or convenience applications (e.g. lane change warning system, rear obstacle detection). The optical device 30 is configured to refractively shift light propagating along a field of view axis 32 of a field of view about a vehicle 26 to an image sensing device axis 34 of an image sensing device 36. The field of view axis 32 is directed through a vehicle window 38 characterized as having a substantial rake angle 74. Hereafter, a substantial rake angle 74 is an acute angle formed between a surface of the vehicle window 38 and a horizontal plane that is less than 45 degrees. The vehicle window 38 is typically a vehicle windshield, but may also be a vehicle side window, rear window, an image sensing device portal, or any other refractive boundary of the vehicle 26.

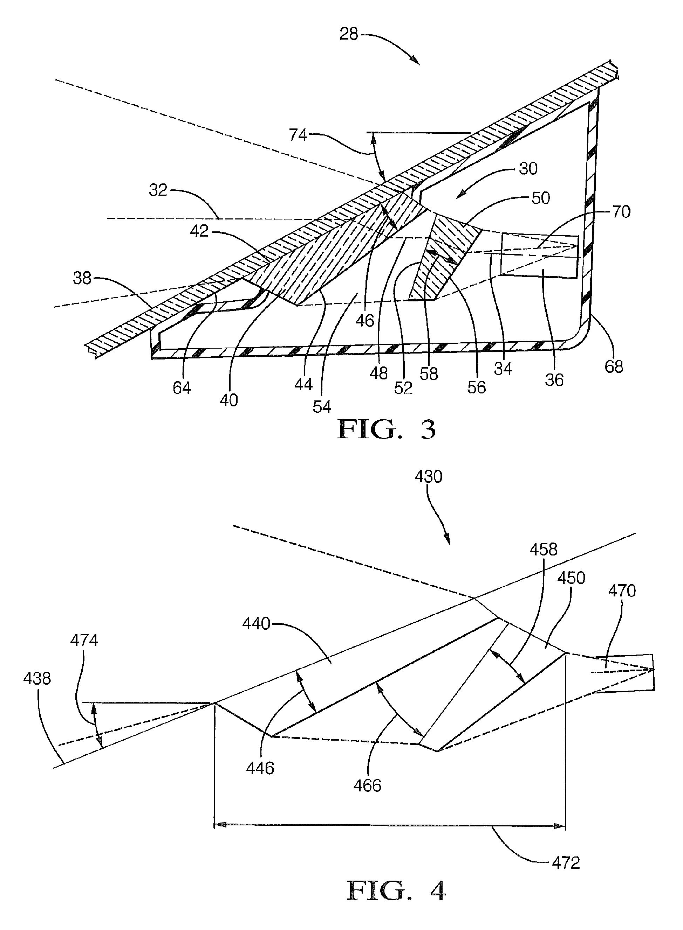

Fig. 3 illustrates a non-limiting example of the optical device 30 that includes a first refractive element 40 formed of optically transparent material having a first index of refraction. The first refractive element 40 defines a first surface 42 configured to be optically coupled with the vehicle window 38. The first refractive element 40 defines a second surface 44 oriented at a first prism angle 46 to the first surface 42. Light impinging on the first surface 42 along the field of view axis 32 passes through the first refractive element 40 and exits the second surface 44 along an intermediate axis 48. The first prism angle 46 is selected so that light impinging on the first surface 42 is not reflected within the first refractive element 40.

The optical device 30 may further include a second refractive element 50 formed of optically transparent material having a second index of refraction. The second refractive element 50 defines a third surface 52 separated from the second surface 44 by a refractive boundary layer 54. The refractive boundary layer 54 provides a refractive boundary for the first refractive element 40 and the second refractive element 50. The refractive boundary layer 54 may define a region having a third index of refraction within the optical device 30 without adding significant mass to the optical device 30. The second refractive element 50 defines a fourth surface 56 oriented to the third surface 52 at a second prism angle 58. Light propagating through the refractive boundary layer 54 and impinging on the third surface 52 along the intermediate axis 48 passes through the second refractive element 50 and exits the fourth surface 56 along the image sensing device axis 34. Light from the field of view is directed to the image sensing device 36. The second prism angle 58 is selected so that light impinging on the third surface 52 is not reflected within the second refractive element 50.

It has been observed that limiting or eliminating internal reflection improves the quality of an image of the field of view directed through the optical device 30. The quality of the image may be further improved by controlling light at a peripheral surface of the first refractive element 40 and the second refractive element 50, which include all surfaces of the first refractive element 40 and the second refractive element 50 other than the first surface 42, the second surface 44, the third surface 52, or the fourth surface 56. These peripheral surfaces may be treated or formed to intentionally minimize the transmission of light while simultaneously minimizing the reflection of light within the first refractive element 40 or the second refractive element 50. In a non-limiting example, these peripheral surfaces may be intentionally roughened or otherwise textured in order to minimize light transmission and/or the reflection of light within the block from these surfaces. Further, these peripheral surfaces may be coated with optically opaque materials to achieve the desired results.

Further, it may be advantageous to form antireflective coatings or films on the first surface 42, the second surface 44, the third surface 52, or the fourth surface 56 to reduce the amount of internal reflection. One non-limiting example may include a single film of magnesium fluoride (MgF₂). The thickness of such a film may be tuned to achieve the most desirable results to minimize surface reflections for the wavelength or wavelengths of interest. It will be instantly recognized by a person skilled in the art that more complicated antireflective structures are also useable in the embodiments described in the present application.

The image sensing device axis 34 may not be parallel to the field of view axis 32. Fig. 3 may appear to suggest that the field of view axis 32 and the image sensing device axis 34 are co-planar. This is not a requirement. Embodiments may be contemplated where the field of view axis 32 and the image sensing device axis 34 are not co-planar nor parallel.

Continuing to refer to Fig. 3, the first surface 42 may define a shape corresponding to a surface profile of an inner surface 64 of the vehicle window 38. The first surface 42 may be in intimate contact with the inner surface 64 of the vehicle window 38. When light passes through refractive boundaries with different indexes of refraction, light is frequently lost in the transmission. An optically transparent adhesive with an index of refraction substantially similar to an index of refraction of the vehicle window 38 may be used to mount the first refractive element 40 to the vehicle window 38. As a result, the amount of light lost due to a difference between the index of refraction of the window and the index of refraction of the adhesive is minimized. Further, the first index of refraction may be selected to be similar to the index of refraction of the vehicle window 38 and the index of refraction of the adhesive. This configuration may minimize light lost as light passes through the vehicle window 38 and into the first refractive element 40. This configuration may also minimize the collection of containments between the inner surface 64 of the vehicle window 38 and the first refractive block. Vehicle windows 38 are frequently composed of glass and consequently have indexes of refraction in the range of about 1.45 to about 1.55. Accordingly, the first refractive element 40 may be formed of glass or polymeric materials having a comparable index of refraction in the range of about 1.45 to about 1.55.

The refractive boundary layer 54 may be preferentially filled by air or other optically transparent gas to reduce the mass of the optical device 30. The refractive boundary layer 54 may alternately be filled by an optically transparent gel or liquid. The gel or liquid may define a third index of refraction within the optical device 30. The gel or liquid may be chosen to have a different index of refraction than the first refractive device 40. The gel or liquid may minimize the collection of contaminants on the second surface 44 and the third surface 52. The boundary layer may alternately be filled by an optical or photonic metamaterial. Optical metamaterials have a negative refractive index based on micro-structural properties, which may provide a shorter optical path through the optical device 30.

Due to the orientation of the first surface 42 relative to the second surface 44 of the first refractive element 40 at a first prism angle 46, the first refractive element 40 may be characterized as a wedge prism shape. Therefore, the first refractive element 40 may have a non-uniform thickness. It has been observed that this non-uniform thickness may produce optical distortion of the image. Without subscribing to any particular theory, it is believed that this is because the refraction (or deviation) of the field angles caused by the wedge prismatic shape varies with the incoming light ray's incident angle. The incoming light rays coming from the intended field of view enter the first surface 42 at various incident angles. Due to the variation in thickness across the first refractive element 40, the refraction introduces additional deviation of the varying exit field angles of the light rays and does so at incrementally varying amounts across the field of view. This variation in the refracted angle deviation may cause a minor amount of optical distortion of the total field of view.

The optical distortion may be determined by calculating the greatest angular deviation for any light ray in the intended field of view entering the optical device 30 as a percentage of the intended total field of view. For example, if the largest angular deviation of any light ray in the field of view of the optical device 30 is 2 degrees and the field of view of the optical device 30 is 20 degrees, then the optical distortion is 10%.

The first refractive element 40 and the second refractive element 50 may define complementary shapes selected to minimize optical distortion. The shape of the second refractive element 50 may be selected to have a complementary wedge prism shape. The complementary wedge prism shape is selected to correct or offset the optical distortion created by the first refractive element 40. The complementary wedge prism shape is dependent upon the vehicle window rake angle 74, the angular relationship of the image sensing device axis 34 to the fourth surface 56, and the first index of refraction and the second index of refraction.

Fig. 4 illustrates a non-limiting example of an optical device 430 having a first refractive element 440 and a second refractive element 450 that are wedge prism shaped. The optical device 430 is configured for a vehicle window 438 rake angle 474 of 20.6 degrees. The first refractive element 440 defines a first prism angle 446 of 5.41 degrees. The second refractive element 450 defines a second prism angle 458 of 16.31 degrees. The refractive boundary layer angle 466 between the first refractive device 440 and the second refractive device 450 is 25.20 degrees. The index of refraction of both the first refractive device 440 and the second refractive device 450 is 1.53.The lens axis 470 is 5 degrees below horizontal. In this example, the optical distortion of optical device 430 is 0.09 degrees or about 0.3 percent. The equivalent length of the optical path 472 through the optical device 430 is 44.3 mm.

Referring again to Fig. 3, the first index of refraction may be distinct from the second index of refraction. The first index of refraction and the second index of refraction may be complementary indexes of refraction. The complementary indexes of refraction refer to a difference between the first index of refraction and the second index of refraction such that the refraction through the prisms can minimize the distortion (or deviation from the original field of view angle). The greater the absolute difference between the first index of refraction and the second index of refraction, the sharper the deviation within the prisms and the smaller overall physical size of the prism shapes. In a non-limiting example, if the first index of refraction and the second index of refraction are the same, a particular first prism angle 46 and second prism angle 58 would be required. If the first index of refraction is higher, the first prism angle 46 would be smaller and result in a smaller first refractive element 40, thereby reducing distortion in the first refractive element 40. The smaller first refractive element 40 may result in a smaller glare shield 68.

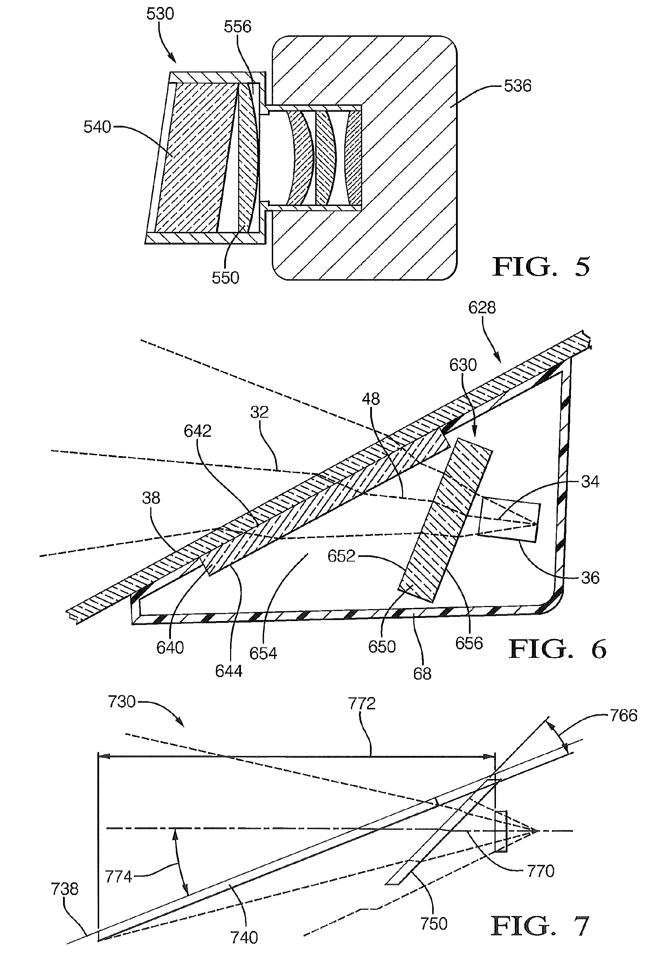

Referring now to Fig. 5, the optical device 530 may include a fourth surface 556 shaped such that the second refractive element 550 is further configured to function as a lens element of the image sensing device 536. This may allow the elimination of a lens element in the image sensing device 536 and may therefore reduce the cost of the image sensing device 536.

Referring now to Fig. 6, the optical device 630 includes a first refractive element 640 formed of optically transparent material having a first index of refraction. The first refractive element 640 defines a first surface 642 is configured to be optically coupled with the vehicle window 38. The first refractive element 640 defines a second surface 644. The first surface 642 may be parallel to the second surface 644. Light impinging on the first surface 642 along the field of view axis 32 passes through the first refractive element 640 and exits the second surface 644 along an intermediate axis 48.

The optical device 630 further includes a second refractive element 650 formed of optically transparent material having a second index of refraction. The second refractive element 650 defines a third surface 652 separated from the second surface 644 by a refractive boundary layer 654. The refractive boundary layer 654 provides a refractive boundary for the first refractive element 640 and the second refractive element 650. The refractive boundary layer 654 defines a region having a third index of refraction within the optical device 630 without adding significant mass to the optical device 630 The second refractive element 650 defines a fourth surface 656. The third surface 652 may be parallel to the fourth surface 656. Light propagating through the refractive boundary layer 654 and impinging on the third surface 652 along the intermediate axis 48 passes through the second refractive element 650 and exits the fourth surface 656 along the image sensing device axis 34. Light from the field of view is directed to the image sensing device 36.

Since the first surface 642 and the second surface 644 of the first refractive element 640 are parallel, the first refractive element 640 has a uniform thickness. Therefore, the first refractive element 640 may not produce optical distortion due to a variation in the angle of refraction. Likewise, since the third surface 652 and the fourth surface 656 of the second refractive element 650 are parallel, the second refractive element 650 may not produce a significant amount of optical distortion due to a variation in the angle of refraction. The first surface 642, the second surface 644, the third surface 652, and the fourth surface 656 may all be planar surfaces. The first refractive element 640 and the second refractive element 650 may be characterized as a parallel plate shape. The first refractive element 640 and the second refractive element 650 may have a different thickness.

The use of a first refractive element 640 and a second refractive element 650 with parallel plate shape shapes allows compression of an optical path length since the index of refraction of the first refractive element 640 and the second refractive element 650 (typically 1.45 to 1.55) is greater than air (1.00). The first refractive element 640 and the second refractive element 650 may have the same index of refraction or a different index of refraction (e.g. to achieve an achromatic or color correction by using complementary indexes of refraction similar to an achromatic lens design).

Fig. 7 illustrates a non-limiting example of an optical device 730 having a first refractive element 740 and a second refractive element 750 that are parallel plate shaped. The optical device 730 is configured for a vehicle window 738 rake angle 774 of 22.0 degrees. The first refractive device 740 is parallel to the vehicle window 738, therefore it is also defines an angle of 22.0 degrees from horizontal. The second refractive device 750 defines an angle of 45.0 degrees from horizontal. The refractive boundary layer angle 766 between the first refractive device 740 and the second refractive device 750 is 23.0 degrees. The thickness of the first refractive element 740 and the second refractive element 750 are both 2 mm. The index of refraction of both the first refractive device 740 and the second refractive device 750 is 1.53. The lens axis 770 is 1 degree below horizontal. Due to the first refractive element 740 and the second refractive 750 element having a parallel plate shape, optical device 730 has almost no added optical distortion. The equivalent length of the optical path 772 through the optical device 730 is 75.55 mm.

Referring once again to Fig. 3, an embodiment of an imaging system 28 is shown. The imaging system 28 is configured to refractively shift light propagating along a field of view axis 32 of a field of view about a vehicle 26 to an image sensing device axis 34 of an image sensing device 36. The field of view axis 32 is directed through a vehicle window 38 characterized as having a substantial rake angle 74.

The imaging system 28 includes a first refractive element 40 formed of optically transparent material having a first index of refraction. The first refractive element 40 defines a first surface 42 configured to be optically coupled with the vehicle window 38. The first refractive element 40 defines a second surface 44 oriented at a first prism angle 46 to the first surface 42. Light impinging on the first surface 42 along the field of view axis 32 passes through the first refractive element 40 and exits the second surface 44 along an intermediate axis 48.

The imaging system 28 further includes a second refractive element 50 formed of optically transparent material having a second index of refraction. The second refractive element 50 defines a third surface 52 separated from the second surface 44 by a refractive boundary layer 54. The second refractive element 50 defines a fourth surface 56 oriented to the third surface 52 at a second prism angle 58. Light impinging on the third surface 52 along the intermediate axis 48 passes through the second refractive element 50 and exits the fourth surface 56 along the image sensing device axis 34.

The image sensing device 36 is in optical communication with the second refractive element 50. Light defining an image from the field of view is directed into the image sensing device 36.

Continuing to refer to Fig. 3, the optical device 30 and the image sensing device 36 may be contained within a glare shield 68 to minimize the opportunity for light reflected from surfaces within the vehicle 26, e.g. the vehicle dashboard, to enter the optical path of the imaging system 28. The glare shield 68 may be sealed to minimize the opportunity for contaminants (e.g. water vapor condensation, smoke, dust, vinyl precipitates, etc.) to interfere in the optical path between the inner surface 64 of the vehicle window 38 and the image sensing device 36.

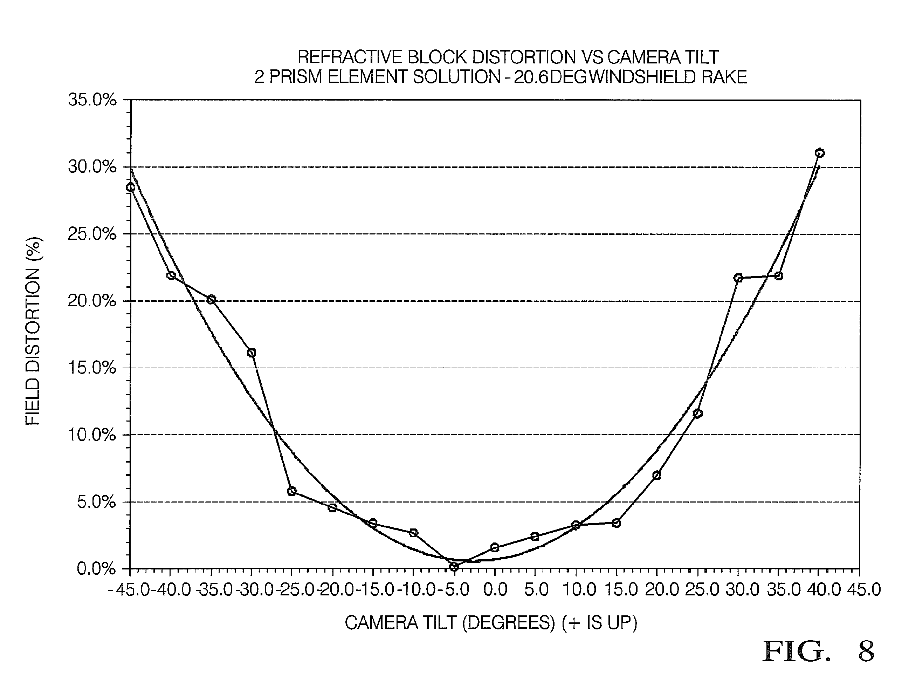

Referring yet again to Fig. 3, a lens axis 70 defined by the image sensing device 36 may be non-parallel to the image sensing device axis 34. It has been observed that tilting the lens axis 70 in relation to the image sensing device axis 34 may impact the optical distortion of the image of the field of view, see Fig. 8.

By incorporating an optical device 30 with a plurality of refractive elements, an imaging system 28 design may be established that can be adapted to a variety of vehicle platforms using common components (i.e. the image sensing device 36, lenses, and electronics assemblies) for the remainder of the imaging system 28. Since the vehicle window rake angle 74 does not specifically alter the end refraction result, the specific shapes of the refractive elements may be common as well.

## Claims

1. An optical device (30) configured to refractively shift light propagating along a field of view axis (32) of a field of view about a vehicle (26) to an image sensing device axis (34) of an image sensing device (36), wherein the field of view axis (32) is directed through a vehicle window (38) characterized as having a substantial rake angle (74), said optical device (30) comprising:
a first refractive element (40) formed of material having a first index of refraction, wherein said first refractive element (40) defines a first surface (42) configured to be optically coupled with the vehicle window (38), wherein said first refractive element (40) defines a second surface (44) oriented at a first prism angle (46) to the first surface (42), whereby light impinging on the first surface (42) along the field of view axis (32) passes through the first refractive element (40) and exits the second surface (44) along an intermediate axis (48); and
a second refractive element (50) formed of material having a second index of refraction, wherein said second refractive element (50) defines a third surface (52) separated from the second surface (44) by a refractive boundary layer (54), wherein said second refractive element (50) defines a fourth surface (56) oriented to the third surface (52) at a second prism angle (58), whereby light propagating through the refractive boundary layer (54) and impinging on the third surface (52) along the intermediate axis (48) passes through the second refractive element (50) and exits the fourth surface (56) along the image sensing device axis (34), whereby light from the field of view can be directed to the image sensing device (36).

2. The optical device (30) of claim 1, wherein the image sensing device axis (34) is not parallel to the field of view axis (32).

3. The optical device (30) of claim 1, wherein the first surface (42) defines a shape corresponding to a surface profile of an inner surface (64) of the vehicle window (38).

4. The optical device (30) of claim 3, wherein the first surface (42) is in intimate contact with the inner surface (64) of the vehicle window (38).

5. The optical device (30) of claim 1, wherein the first refractive element (40) and the second refractive element (50) define complementary shapes selected to minimize optical distortion.

6. The optical device (30) of claim 1, wherein the first index of refraction is distinct from the second index of refraction.

7. The optical device (30) of claim 1, wherein the fourth surface (556) is shaped such that the second refractive element (550) is further configured to function as a lens element of the image sensing device (536).

8. The optical device (630) of claim 1, wherein the first surface (642) is parallel to the second surface (644) and the third surface (652) is parallel to the fourth surface (656).

9. The optical device (630) of claim 8, wherein the first surface (642), the second surface (644), the third surface (652), and the fourth surface (656) are all planar surfaces.

10. An imaging system (28) configured to refractively shift light propagating along a field of view axis (32) of a field of view about a vehicle (26) to an image sensing device axis (34) of an image sensing device (36), wherein the field of view axis (32) is directed through a vehicle window (38) characterized as having a substantial rake angle (74), said imaging system (28) comprising:
an image sensing device (36); and
an optical device (28) as claimed in any one of claims 1 to 9; wherein
the image sensing device (36) is in optical communication with the second refractive element (50), whereby light from the field of view is directed into the image sensing device (36).
